(19)

Europäisches Patentamt

European Patent Office

Office européen des brevets

(11) **EP 4 497 658 A1**

(12) **EUROPEAN PATENT APPLICATION**
published in accordance with Art. 153(4) EPC

(43) Date of publication:
**29.01.2025  Bulletin 2025/05**

(21) Application number: **23774519.5**

(22) Date of filing: **07.03.2023**

(51) International Patent Classification (IPC):
**B62D 6/00** $^{(2006.01)}$        **B62D 53/08** $^{(2006.01)}$

(52) Cooperative Patent Classification (CPC):
**B62D 15/027; B62D 13/06**

(86) International application number:
**PCT/JP2023/008643**

(87) International publication number:
**WO 2023/181920 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2022  JP 2022046876**

(71) Applicant: **JTEKT Corporation**
**Kariya-shi, Aichi-ken 448-8652 (JP)**

(72) Inventors:
• **NITTA Nobuhiro**
  **Tokyo 103-0022 (JP)**
• **OHMORI Yosuke**
  **Tokyo 103-0022 (JP)**

(74) Representative: **Winter, Brandl - Partnerschaft mbB**
**Alois-Steinecker-Straße 22**
**85354 Freising (DE)**

(54) **CONTROL DEVICE FOR ARTICULATED VEHICLE**

(57)    A control device (42) for a combination vehicle (10) includes a normal mode, a bad mode, and an abnormal mode as a control mode of reverse assist control. The normal mode is a control mode that is set when no abnormality is detected in vehicle state quantities. The bad mode is a control mode that is set when an abnormality is detected in any vehicle state quantity and there is a substitute value for that vehicle state quantity. The abnormal mode is a control mode that is set when an abnormality is detected in any vehicle state quantity and there is no substitute value for that vehicle state quantity. When the control mode is set to the bad mode, the control device (42) continues to execute the reverse assist control using the substitute value for the vehicle state quantity. When the control mode is set to the abnormal mode, the control device (42) executes a process for stopping the combination vehicle.

Fig.6

EP 4 497 658 A1

**Description**

TECHNICAL FIELD

The present disclosure relates to control devices for combination vehicles.

BACKGROUND ART

Conventionally, there is a combination vehicle that is a combination of a vehicle serving as a tractor and a trailer attached thereto. Steering of the combination vehicle is more difficult than steering of a single vehicle such as a regular passenger vehicle. In particular, the steering operation required in reverse operation of the combination vehicle is opposite to the steering operation required to reverse a single vehicle with no trailer connected thereto.

A system has been proposed that assists in reverse operation of a combination vehicle. For example, a system of Patent Document 1 automatically steers a vehicle so that a trailer moves along a reference path specified by a driver, when the driver controls the vehicle's reverse speed using an accelerator pedal and a brake pedal. A curvature controller of the system executes control to reverse the trailer along the reference path based on the tractor's steering angle. The curvature controller includes a curvature regulator and a hitch angle regulator.

The curvature regulator calculates a target hitch angle based on the current steering angle provided by a measurement module and a target curvature of the trailer path input via an input device. The hitch angle regulator calculates a steering angle command for an electric power steering system through feedback control of the hitch angle so that the current hitch angle follows the target hitch angle calculated by the curvature regulator. The electric power steering system rotates a steering wheel based on the steering angle command.

Related Art Documents

Patent Documents

Patent Document 1: US Patent No. 9592851

SUMMARY OF THE INVENTION

Problem to be Solved by the Invention

A control device for a combination vehicle needs to properly grasp the state of the combination vehicle in order to appropriately control the behavior of the combination vehicle. When an abnormality occurs in the combination vehicle, the control device for the combination vehicle is required to appropriately deal with the abnormality.

Means for Solving the Problem

A control device for a combination vehicle according to one aspect of the present disclosure is configured to control a combination vehicle including a tractor including a steered wheel that is a wheel configured to change a direction of travel of the vehicle, and a trailer towed by the tractor. The control device for the combination vehicle is configured to execute reverse assist control that is control for assisting in reverse operation of the combination vehicle, and a process for detecting an abnormality in a vehicle state quantity used in the reverse assist control. The control device for the combination vehicle includes, as a control mode of the reverse assist control, a normal mode that is set when the abnormality is not detected in the vehicle state quantity, a bad mode that is set when the abnormality is detected in the vehicle state quantity and there is a substitute value for the vehicle state quantity, and an abnormal mode that is set when the abnormality is detected in the vehicle state quantity and there is no substitute value for the vehicle state quantity. The control mode for the combination vehicle is configured to, when the control mode is set to the bad mode, continue to execute the reverse assist control using the substitute value for the vehicle state quantity, and when the control mode is set to the abnormal mode, execute a process for stopping the combination vehicle.

BRIEF DESCRIPTION OF THE DRAWINGS

[FIG. 1] FIG. 1 is a perspective view of a combination vehicle equipped with an embodiment of a control device for the combination vehicle.

[FIG. 2] FIG. 2 is a block diagram of a reverse assist device according to the embodiment.

[FIG. 3] FIG. 3 is a kinematic model of the combination vehicle according to the embodiment.

[FIG. 4] FIG. 4 is a kinematic model of a trailer according to the embodiment.

[FIG. 5] FIG. 5 is a block diagram of the embodiment of the control device for the combination vehicle.

[FIG. 6] FIG. 6 is a flowchart showing a processing procedure in a bad mode and an abnormal mode according to the embodiment of the control device for the combination vehicle.

MODES FOR CARRYING OUT THE INVENTION

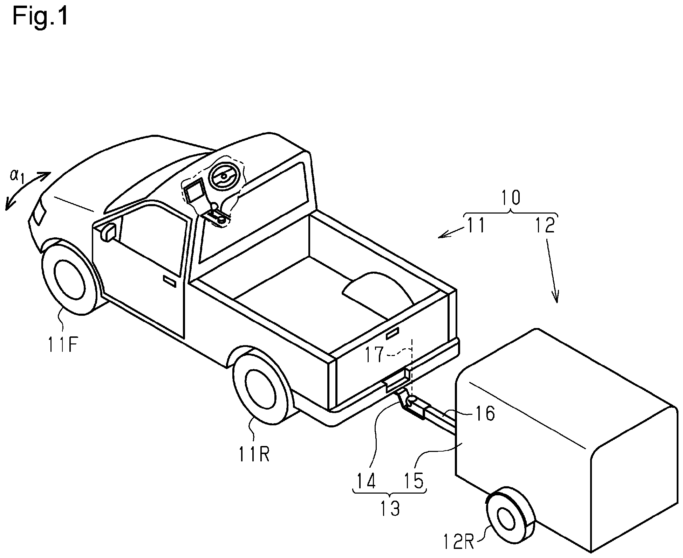

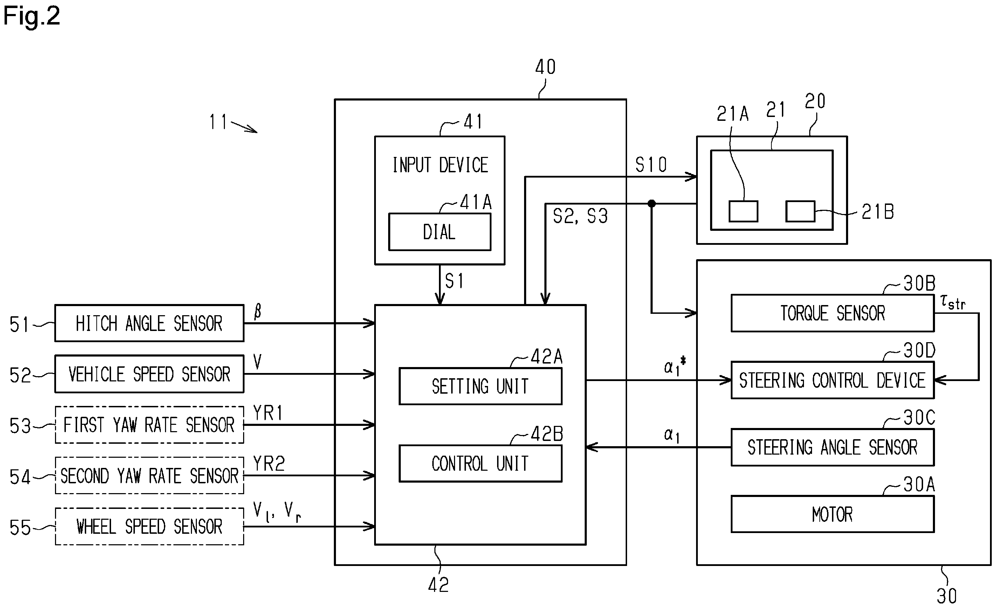

A control device for a combination vehicle according to an embodiment will be described.
As shown in FIG. 1, a combination vehicle 10 includes a tractor 11 and a trailer 12. Although there are various types of tractors 11, a pickup truck that is one type of small trucks is herein taken as an example. The tractor 11 includes front wheels 11F and rear wheels 11R. The front wheels 11F include two wheels, namely a right front wheel and a left front wheel, and the rear wheels 11R include two wheels, namely a right rear wheel and a left rear wheel. FIG. 1 shows only the left front wheel and the left rear wheel. The front wheels 11F and a steering wheel are connected to each other via a steering mechanism, not shown, so that power can be transmitted therebetween. The front wheels 11F are steered wheels. The steered wheels refer to wheels that change the direction of travel of the tractor 11 by moving in response to the operation of the steering wheel.
Although there are trailers 12 with various shapes and sizes depending on the application, a box-shaped trailer is herein taken as an example. The trailer 12 includes wheels 12R. The wheels 12R include two wheels, namely a right wheel and a left wheel. FIG. 1 shows only the left wheel.
The trailer 12 is connected to the rear of the tractor 11 via a ball joint 13. The ball joint 13 includes a hitch ball 14 and a hitch coupler 15. The hitch ball 14 is provided at the rear of the tractor 11 via a hitch member. The hitch coupler 15 is provided at the distal end of a tongue 16 that protrudes from the front of the trailer 12. When the hitch coupler 15 is attached to the hitch ball 14, the trailer 12 is connected to the tractor 11 so as to be rotatable about an axis 17. The axis 17 extends in a height direction of the tractor 11.
As shown in FIG. 2, the tractor 11 includes a display device 20, a steering device 30, and a reverse assist device 40.
The display device 20 is installed on, for example, an instrument panel in a vehicle cabin. The display device 20 is, for example, a touch panel. It is possible to input data or give instructions to operate in-vehicle devices by touching display on a screen 21. The screen 21 displays, for example, an assist start button 21A and an assist end button 21B. The assist start button 21A is operated when turning on a reverse assist function of the combination vehicle 10. The assist end button 21B is operated when turning off the reverse assist function of the combination vehicle 10.
When the assist start button 21A is operated, the display device 20 generates an assist start request signal S2. The assist start request signal S2 is an electrical signal indicating that an operator is requesting to start execution of reverse assist control for the combination vehicle 10. When the assist start button 21A is operated, the display device 20 generates an assist end request signal S3. The assist end request signal S3 is an electrical signal indicating that the operator is requesting to end execution of the reverse assist control for the combination vehicle 10.
The steering device 30 is, for example, an electric power steering system. The steering device 30 is a system for assisting the operator in steering the steering wheel, and includes a motor 30A, a torque sensor 30B, a steering angle sensor 30C, and a steering control device 30D. The operator includes a driver who drives the combination vehicle 10 in the vehicle cabin of the tractor 11.
The motor 30A generates an assist force. The assist force is a force for assisting in steering of the steering wheel. The torque of the motor 30A is applied to the steering mechanism of the front wheels 11F via a speed reduction mechanism. The torque sensor 30B detects a steering torque $\tau_{str}$ that is a torque applied to the steering wheel. The steering angle sensor 30C detects a steering angle $\alpha_1$ that is a turning angle of the front wheels 11F based on, for example, a rotation angle of the motor 30A. The front wheels 11F and the motor 30A operate in conjunction with each other via the steering mechanism. Therefore, there is a correlation between the rotation angle of the motor 30A and the steering angle $\alpha_1$ of the front wheels 11F. Accordingly, the steering angle $\alpha_1$ of the front wheels 11F can be obtained based on the rotation angle of the motor 30A.
The steering control device 30D executes assist control when the reverse assist function of the combination vehicle 10 is off. That is, the steering control device 30D controls energization of the motor 30A based on the steering torque $\tau_{str}$ detected by the torque sensor 30B to cause the motor 30A to generate an assist force according to the steering torque $\tau_{str}$.

The steering control device 30D executes steering control on the front wheels 11F when the reverse assist function of the combination vehicle 10 is on. That is, when the reverse assist function of the combination vehicle 10 is on, the steering control device 30D controls the steering angle $\alpha_1$ of the front wheels 11F by controlling the rotation angle of the motor 30A based on a target steering angle $\alpha_1^*$ generated by the reverse assist device 40. The target steering angle $\alpha_1^*$ is a target value of the steering angle $\alpha_1$ of the front wheels 11F. The steering control device 30D controls the operation of the motor 30A by executing feedback control on the steering angle $\alpha_1$ of the front wheels 11F detected by the steering angle sensor 30C so that the steering angle $\alpha_1$ becomes equal to the target steering angle $\alpha_1^*$.

The reverse assist device 40 assists in the reverse operation of the combination vehicle 10 when the reverse assist function of the combination vehicle 10 is on. The reverse assist device 40 calculates the target steering angle $\alpha_1^*$ of the front wheels 11F based on a reverse direction or reverse path of the combination vehicle 10 specified by the operator and the steering angle $\alpha_1$ of the front wheels 11F detected by the steering angle sensor 30C. The target steering angle $\alpha_1^*$ is a target value of the steering angle $\alpha_1$ of the front wheels 11F required for the combination vehicle 10 to move in the reverse direction or along the reverse path of the combination vehicle 10 specified by the operator. When the reverse assist function of the combination vehicle 10 is off, the reverse assist device 40 does not calculate the target steering angle $\alpha_1^*$.

<Reverse Assist Device>

Next, the reverse assist device 40 will be described in detail.
As shown in FIG. 2, the reverse assist device 40 includes an input device 41 and a control device 42.

The input device 41 includes a dial 41A as an operation member. The dial 41A is provided on, for example, a center console in the vehicle cabin. The dial 41A is operated by the operator when specifying the reverse direction or reverse path of the combination vehicle 10. The reverse direction or the reverse path includes, for example, a left reverse, a right reverse, and a straight reverse. When reversing the combination vehicle 10 to the left, the dial 41A is operated counterclockwise with respect to a reference position corresponding to a straight path. When reversing the combination vehicle 10 to the right, the dial 41A is operated clockwise with respect to the reference position. When reversing the combination vehicle 10 straight, the dial 41A is kept at the reference position. The input device 41 generates an electrical signal S1 according to the amount of operation or operation position of the dial 41A with respect to the reference position.

The control device 42 includes a processing circuit including any one of the following three configurations A1, A2, and A3.

A1. One or more processors that operate according to a computer program that is software. The processor includes a CPU (central processing unit) and a memory.

A2. One or more dedicated hardware circuits that execute at least part of various processes, such as an application-specific integrated circuit (ASIC). The ASIC includes a CPU and a memory.

A3. A hardware circuit composed of a combination of the configurations A1, A2. The memory is a medium that can be read by a computer (in this case, the CPU) and stores programs that describe processes or instructions for the computer. The memory includes a RAM (random access memory) and a ROM (read only memory). The CPU executes various types of control by executing the programs stored in the memory at a determined calculation cycle. The programs include a program for executing the reverse assist control for the combination vehicle 10. The reverse assist control refers to control for assisting in the reverse operation of the combination vehicle 10.

The control device 42 executes the reverse assist control for the combination vehicle 10. The control device 42 starts executing the reverse assist control when the operator performs an operation to start the reverse assist control. The control device 42 stops executing the reverse assist control when the operator performs an operation to end the reverse assist control. The operator performs the operations to start and end the reverse assist control via the display device 20. When the assist start button 21A displayed on the screen 21 of the display device 20 is touched, the control device 42 starts executing the reverse assist control. When the assist end button 21B displayed on the screen 21 of the display device 20 is touched, the control device 42 ends the execution of the reverse assist control.

During the execution of the reverse assist control, the control device 42 controls the reverse path of the combination vehicle 10 via the steering device 30 so that the combination vehicle 10 moves in the reverse direction or along the reverse path of the combination vehicle 10 specified by the operator.

The control device 42 includes a setting unit 42A and a control unit 42B.
The setting unit 42A sets a target virtual steering angle $\alpha_2^*$ of the trailer 12 based on the electrical signal S1 generated by the input device 41, that is, the amount of operation or operation position of the dial 41A with respect to the reference position. The target virtual steering angle $\alpha_2^*$ is a target value of a virtual steering angle $\alpha_2$ of the trailer 12. The virtual steering angle $\alpha_2$ refers to an apparent steering angle when the trailer 12 is virtually separated from the tractor 11 and regarded as a single vehicle including a virtual front wheel. The setting unit 42A calculates the target virtual steering angle $\alpha_2^*$ according to the amount of operation or operation position of the dial 41A by using, for example, a map that defines the relationship between the amount of operation or operation position of the dial 41A and the target virtual steering angle $\alpha_2^*$ of the trailer 12. The operator can specify the target virtual steering angle $\alpha_2^*$ according to a desired reverse path for reversing the trailer 12 by operating the dial 41A.

The control unit 42B acquires the target virtual steering angle $\alpha_2^*$ set by the setting unit 42A, a hitch angle $\beta$ detected by an in-vehicle hitch angle sensor 51, a vehicle speed V detected by an in-vehicle vehicle speed sensor 52, and the steering angle $\alpha_1$ detected by the steering angle sensor 30C. The hitch angle $\beta$ refers to an angle between a central axis extending in a longitudinal direction of the tractor 11 and a central axis extending in a longitudinal direction of the trailer 12. The hitch angle $\beta$ is also referred to as a bending angle of the trailer 12.

The control unit 42B calculates the target steering angle $\alpha_1^*$ of the front wheels 11F of the tractor 11 based on the target virtual steering angle $\alpha_2^*$ set by the setting unit 42A and the hitch angle $\beta$, vehicle speed V, and steering angle $\alpha_1$ detected by the sensors. The control unit 42B calculates the target steering angle $\alpha_1^*$ of the front wheels 11F so that the virtual steering angle $\alpha_2$ of the trailer 12 converges to the target virtual steering angle $\alpha_2^*$. That is, the control unit 42B calculates the target steering angle $\alpha_1^*$ of the front wheels 11F by executing feedback control on the virtual steering angle $\alpha_2$ of the trailer 12 so that the virtual steering angle $\alpha_2$ becomes equal to the target virtual steering angle $\alpha_2^*$. The control unit 42B may calculate the target steering angle $\alpha_1^*$ using, for example, nonlinear model predictive control (NMPC).

<Kinematic Model of Combination Vehicle>

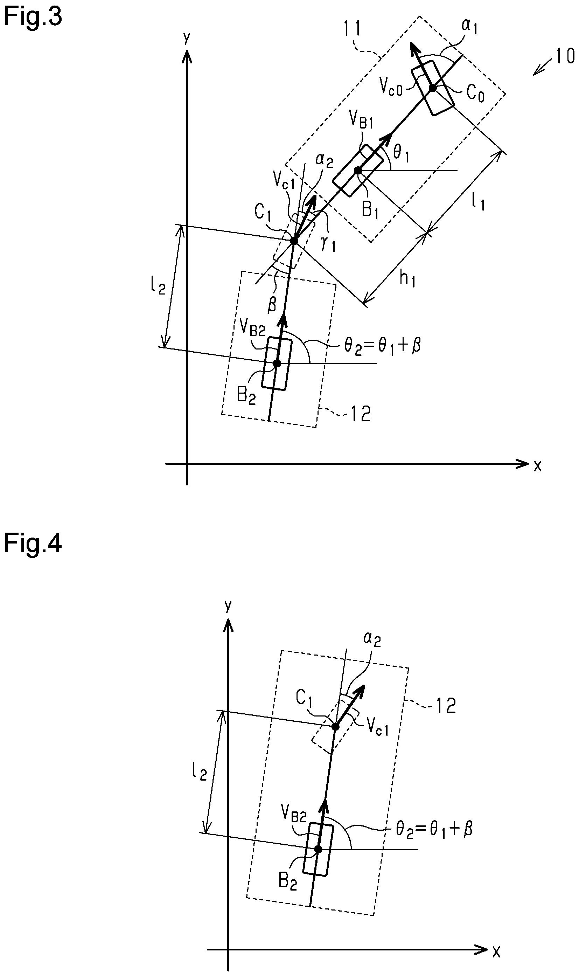

Next, a kinematic model indicating the behavior of the combination vehicle 10 that moves in a plane will be described.
As shown in FIG. 3, the kinematic model of the combination vehicle 10 can be considered as an equivalent model in which the right and left wheels are shifted to the central axis of the vehicle body in a two-dimensional xy coordinate system fixed to the ground. The kinematic model in FIG. 3 is a kinematic model when the combination vehicle 10 moves forward. In the kinematic model of FIG. 3, in order to clarify the behavior of the combination vehicle 10 within the range of kinematics, it is assumed that no skidding of tires of the combination vehicle 10 occurs at extremely low speeds and the combination vehicle 10 has a velocity vector only in the direction of travel. It is also assumed that the vehicle is driven at a constant speed. It is also assumed that the road surface is flat and there is no disturbance from the outside of the combination vehicle 10.

In the kinematic model of FIG. 3, the following parameters of the combination vehicle 10 are used to describe the kinematic relationship between the tractor 11 and the trailer 12.

$C_0$: Front wheel 11F of tractor 11
$B_1$: Rear wheel 11R of tractor 11
$C_1$: Hitch point of tractor 11 (point indicating position of hitch ball 14)
$B_2$: Wheel of trailer 12
$V_{c0}$: Velocity vector of front wheel 11F of tractor 11
$V_{B1}$: Velocity vector of rear wheel 11R of tractor 11
$V_{c1}$: Velocity vector of hitch point $C_1$ of tractor 11
$V_{B2}$: Velocity vector of trailer 12
$\alpha_1$: Steering angle of front wheel 11F of tractor 11
$\alpha_2$: Virtual steering angle of trailer 12
$\gamma_1$: Intermediate variable (angle between central axis of tractor 11 and velocity vector $V_{c1}$ of hitch point $C_1$)
$\theta_1$: Attitude angle of tractor 11 (angle between central axis of tractor 11 and X-axis)
$\theta_2$: Attitude angle of trailer 12 (angle between central axis of trailer 12 and X-axis)
$\beta$: Hitch angle (angle between central axis of tractor 11 and central axis of trailer 12)
$l_1$: Wheelbase of tractor 11
$h_1$: Distance between rear wheel 11R of tractor 11 and hitch point $C_1$
$l_2$: Virtual wheelbase of trailer 12

The signs of each parameter are as follows. That is, the tractor attitude angle $\theta_1$ is positive in the counterclockwise direction with respect to the X-axis. The steering angle $\alpha_1$ of the front wheel 11F of the tractor 11 and the intermediate variable $\gamma_1$ are positive in the counterclockwise direction with respect to the central axis of the tractor 11. The hitch angle $\beta$ is positive in the counterclockwise direction with respect to the central axis of the tractor 11 or its extension. The vehicle speed V is positive for forward movement and negative for reverse movement.

As shown in FIG. 3, the tractor 11 moves according to the velocity vector $V_{c0}$ of the front wheel 11F. The trailer 12 moves according to the velocity vector $V_{c1}$ of the hitch point $C_1$ that is the connection point to the tractor 11. In view of this, the velocity vector $V_{c1}$ of the hitch point $C_1$ as seen from the trailer 12 can be regarded as a velocity vector of the virtual front wheel of the trailer 12. In the kinematic model of FIG. 3, the angle between the velocity vector $V_{c1}$ of the hitch point $C_1$ and the central axis of the trailer 12 is "$\beta - \gamma_1$." In this case, when the trailer 12 is virtually separated from the tractor 11 and regarded as a single vehicle including a virtual front wheel as shown in FIG. 4, the virtual front wheel can be regarded as being steered at the virtual steering angle $\alpha_2$ (= -($\beta$ - $\gamma_1$)) that is an apparent steering angle. This shows that the trailer 12 can be considered as a single vehicle. Velocity vectors in a kinematic model for reverse movement of the combination vehicle 10 are in the opposite directions to those in the kinematic model for forward movement in FIG. 3.

The virtual steering angle $\alpha_2$ of the trailer 12 is represented by the following expression 1.

[Math. 1]

$$\alpha_2 = -\beta - \text{atan}\left(\frac{h_1}{l_1}\tan\,\alpha_1\right)$$

where "$\beta$" is the hitch angle, "$l_1$" is the wheelbase of the tractor 11, "$h_1$" is the distance between the rear wheel 11R of the tractor 11 and the hitch point $C_1$, and "$\alpha_1$" is the steering angle of the front wheel 11F of the tractor 11.

<Supplementary Description of Control Device 42>

Next, supplementary description will be given about the configuration of the control device 42.
As shown in FIG. 2, the tractor 11 may be provided with a first yaw rate sensor 53. The first yaw rate sensor 53 detects a yaw rate YR1 of the tractor 11. The trailer 12 may be provided with a second yaw rate sensor 54. The second yaw rate sensor 54 detects a yaw rate YR2 of the trailer 12. In this case, the control device 42 acquires the yaw rate YR1 of the tractor 11 detected by the first yaw rate sensor 53. The control device 42 also acquires the yaw rate YR2 of the trailer 12 detected by the second yaw rate sensor 54.

The tractor 11 may be provided with wheel speed sensors 55. The wheel speed sensors 55 are installed on the right and left front wheels 11F and rear wheels 11R of the tractor 11. The wheel speed sensors 55 detect a wheel speed $V_l$ that is a rotational speed of the front wheel 11F and rear wheel 11R located on the left side with respect to the direction of travel of the tractor 11. The wheel speed sensors 55 also detect a wheel speed $V_r$ that is a rotational speed of the front wheel 11F and rear wheel 11R located on the right side with respect to the direction of travel of the tractor 11. The wheel speeds $V_l$, $V_r$ are used in various in-vehicle systems.

However, depending on the product specifications, the tractor 11 may be configured without the vehicle speed sensor 52. In this case, the control device 42 may calculate the vehicle speed V using the wheel speeds $V_l$, $V_r$ of the right and left front wheels 11F and rear wheels 11R detected by the wheel speed sensors 55.

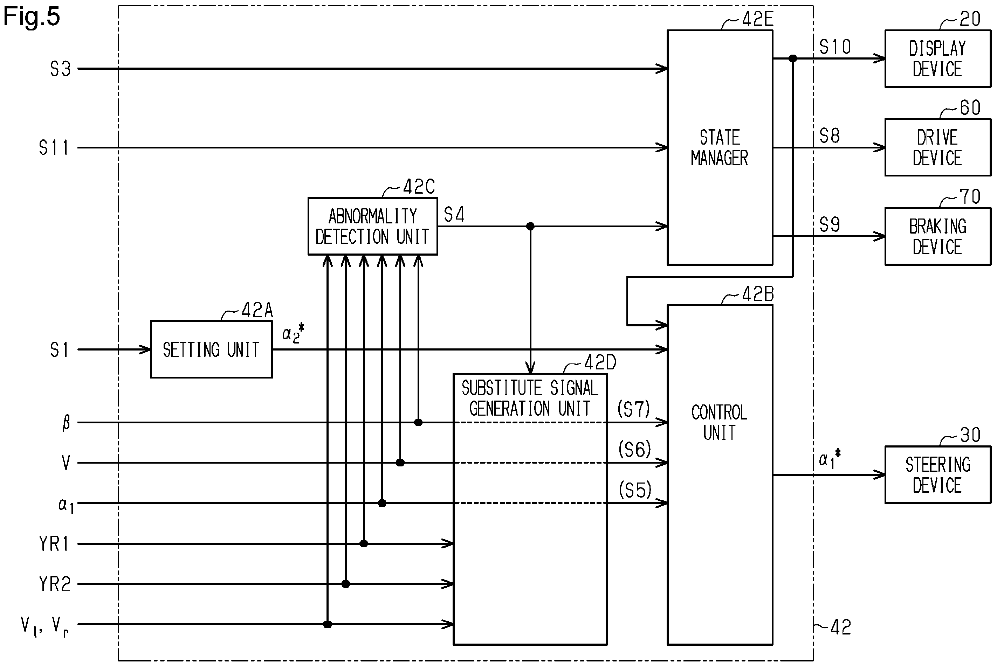

As shown in FIG. 5, the control device 42 further includes an abnormality detection unit 42C, a substitute signal generation unit 42D, and a state manager 42E in addition to the setting unit 42A and control unit 42B described above.

<Abnormality Detection Unit 42C>

The abnormality detection unit 42C detects an abnormality in the combination vehicle 10. As an example, the abnormality detection unit 42C determines the states of the following four detection targets (B1) to (B4).

B1. Target steering angle $\alpha_1$*
B2. Steering angle $\alpha_1$ of front wheels 11F
B3. Vehicle speed V
B4. Hitch angle $\beta$

<Method for Determining State of Target Steering Angle $\alpha_1$*>

A method for determining the state of the target steering angle $\alpha_1$* is as follows. That is, the abnormality detection unit 42C acquires the steering angle $\alpha_1$ of the front wheels 11F detected by the steering angle sensor 30C. In the case where the tractor 11 includes the first yaw rate sensor 53, the abnormality detection unit 42C acquires the yaw rate YR1 of the tractor 11 detected by the first yaw rate sensor 53.

The abnormality detection unit 42C calculates a first estimated steering angle $\alpha_{11}$^ of the front wheels 11F using the following expression 2, where "^" indicates that the value is an estimated value.

[Math. 2]

$$YR = \frac{1}{1+AV^2}\frac{V}{l}\alpha_1$$

where "V" is the vehicle speed and "I" is the wheelbase. The wheelbase $l_1$ of the tractor 11 is substituted in the expression 2. "A" is a stability factor. The stability factor is an adapted value that represents the turning characteristics of the vehicle.

The abnormality detection unit 42C compares the steering angle $\alpha_1$ detected by the steering angle sensor 30C, the first estimated steering angle $\alpha_{11}{}^\wedge$, and the target steering angle $\alpha_1{}^*$ with each other. When all of the following three conditions (D1) to (D3) are satisfied, the abnormality detection unit 42C determines that the value of the target steering angle $\alpha_1{}^*$ is abnormal and that an abnormality with no substitute value has occurred. The abnormality detection unit 42C generates a detection signal S4 indicating that an abnormality with no substitute value for the target steering angle $\alpha_1{}^*$ has occurred.

$$D1.\ |\alpha_1 - \alpha_{11}{}^\wedge| < \alpha_{th1}$$

$$D2.\ |\alpha_1{}^* - \alpha_1| \geq \alpha_{th1}$$

$$D3.\ |\alpha_1{}^* - \alpha_{11}{}^\wedge| \geq \alpha_{th1}$$

where "$\alpha_{th1}$" is a first steering angle determination threshold.

When all of the three conditions (D1) to (D3) are satisfied, it can be said that the steering angle sensor 30C is normal including its communication, but the target steering angle $\alpha_1{}^*$ has an abnormal value for some reason.

When the condition (D1) is satisfied and the conditions (D2), (D3) are not satisfied, the abnormality detection unit 42C determines that the value of the target steering angle $\alpha_1{}^*$ is normal. The abnormality detection unit 42C generates a detection signal S4 indicating that the value of the target steering angle $\alpha_1{}^*$ is normal.

<Method for Determining State of Steering Angle $\alpha_1$>

A method for determining the state of the steering angle $\alpha_1$ is as follows. That is, the abnormality detection unit 42C acquires the wheel speeds $V_l$, $V_r$ of the right and left front wheels 11F and rear wheel 11R detected by the wheel speed sensors 55.

The abnormality detection unit 42C calculates an estimated yaw rate $YR1^\wedge$ of the tractor 11 using the following expression 3, where "^" indicates that the value is an estimated value.

[Math. 3]

$$YR = \left(V_l - V_r\right)\big/ d$$

where "$V_l$" is the wheel speed of the wheels located on the left side with respect to the direction of travel of the tractor 11, "$V_r$" is the wheel speed of the wheels located on the right side with respect to the direction of travel of the tractor 11, and "d" is the distance between the right and left wheels of the tractor 11.

In the case where the trailer 12 includes the wheel speed sensors 55 for each wheel 12R, it is also possible to calculate an estimated yaw rate of the trailer 12 using the expression 3.

The abnormality detection unit 42C calculates a second estimated steering angle $\alpha_{12}{}^\wedge$ of the front wheels 11F by substituting the estimated yaw rate $YR1^\wedge$ of the tractor 11 obtained based on the expression 3 into the above expression 2.

The abnormality detection unit 42C compares the steering angle $\alpha_1$ detected by the steering angle sensor 30C, the first estimated steering angle $\alpha_{11}{}^\wedge$, and the second estimated steering angle $\alpha_{12}{}^\wedge$ with each other.

When all of the following three conditions (E1) to (E3) are satisfied, the abnormality detection unit 42C determines that at least two of the three steering angles ($\alpha_1$, $\alpha_{11}{}^\wedge$, $\alpha_{12}{}^\wedge$) detected by different methods are abnormal. The abnormality detection unit 42C cannot identify which ones of the three steering angles are abnormal. Therefore, none of the three steering angles can be used for the reverse assist control. The abnormality detection unit 42C determines that an abnormality with no substitute value for the steering angle $\alpha_1$ has occurred. The abnormality includes hardware abnormalities of various sensors. The abnormality detection unit 42C generates a detection signal S4 indicating that an abnormality with no substitute value for the steering angle $\alpha_1$ has occurred.

$$E1.\ |\alpha_1 - \alpha_{11}{}^\wedge| \geq \alpha_{th2}$$

$$E2.\ |\alpha_1 - \alpha_{12}{}^\wedge| \geq \alpha_{th2}$$

$$\text{E3. } |\alpha_{11}{}^\wedge - \alpha_{12}{}^\wedge| \geq \alpha_{th2}$$

where "$\alpha_{th2}$" is a second steering angle determination threshold.

When the above conditions (E1), (E2) are satisfied and the condition (E3) is not satisfied, the abnormality detection unit 42C determines that only the first steering angle ($\alpha_1$) is abnormal and that the second steering angle ($\alpha_{11}{}^\wedge$) and the third steering angle ($\alpha_{12}{}^\wedge$) are normal. That is, it is possible to execute the reverse assist control using the second steering angle or the third steering angle instead of the first steering angle. The abnormality detection unit 42C determines that the second steering angle or the third steering angle can be used as a substitute value for the first steering angle for the reverse assist control for the combination vehicle 10. The abnormality detection unit 42C generates a detection signal S4 indicating that an abnormality with a substitute value for the steering angle $\alpha_1$ has occurred.

When none of the three conditions (E1) to (E3) are satisfied, the abnormality detection unit 42C determines that the first to third steering angles are all normal. The abnormality detection unit 42C generates a detection signal S4 indicating that the value of the steering angle $\alpha_1$ is normal.

<Method for Determining State of Vehicle Speed V>

A method for determining the state of the vehicle speed V is as follows. As an example, it is herein assumed that the control device 42 is configured to calculate the vehicle speed V using the wheel speeds $V_l$, $V_r$ of the wheels. The tractor 11 may not include the vehicle speed sensor 52.

When all of the following three conditions (F1) to (F3) are satisfied, the abnormality detection unit 42C determines that the value of the vehicle speed V is abnormal and that there is no substitute value. The abnormality detection unit 42C generates a detection signal S4 indicating that an abnormality with no substitute value for the vehicle speed V has occurred.

F1. The steering angle $\alpha_1$ cannot be detected by the steering angle sensor 30C. F2. The yaw rate YR1 of the tractor 11 cannot be detected by the first yaw rate sensor 53.

F3. There are two or more wheels whose wheel speeds $V_l$, $V_r$ cannot be detected among the right and left wheels of the tractor 11.

When the following condition (F4) is satisfied, the abnormality detection unit 42C determines that it is possible to calculate the vehicle speed V as a substitute value by using only the wheel speeds $V_l$, $V_r$ of the wheels whose wheel speeds $V_l$, $V_r$ can be detected. The abnormality detection unit 42C generates a detection signal S4 indicating that an abnormality with a substitute value for the vehicle speed V has occurred.

F4. There are less than two wheels whose wheel speeds $V_l$, $V_r$ cannot be detected among the right and left wheels of the tractor 11.

When none of the above four conditions (F1) to (F4) are satisfied, the abnormality detection unit 42C determines that the vehicle speed V is normal. The abnormality detection unit 42C generates a detection signal S4 indicating that the value of the vehicle speed V is normal.

<Method for Determining State of Hitch Angle β>

A method for determining the state of the hitch angle β is as follows. That is, when any one of the following four conditions (G1) to (G4) is satisfied, the abnormality detection unit 42C determines that the value of the hitch angle β is abnormal and that there is no substitute value. The abnormality detection unit 42C generates a detection signal S4 indicating that an abnormality with no substitute value for the hitch angle β has occurred.

G1. The value of the vehicle speed V is abnormal.

G2. The value of the steering angle $\alpha_1$ is abnormal.
G3. The value of the yaw rate YR1 of the tractor 11 is abnormal.

G4. The value of the yaw rate YR2 of the trailer 12 is abnormal.

The abnormality detection unit 42C calculates an estimated hitch angle $\beta^\wedge$. The estimated hitch angle $\beta^\wedge$ is an estimated value of the hitch angle β calculated based on vehicle state quantities, where "$^\wedge$" indicates that the value is an estimated value. The vehicle state quantities include the vehicle speed V and the steering angle $\alpha_1$ of the front wheels 11F. In the case where the combination vehicle 10 is provided with the first yaw rate sensor 53 and the second yaw rate sensor 54, the vehicle state quantities include the yaw rate YR1 of the tractor 11 and the yaw rate YR2 of the trailer 12.

The abnormality detection unit 42C calculates the estimated hitch angle $\beta^\wedge$ using an expression obtained by integrating the following expression 4.

[Math. 4]

$$\dot{\beta} = -\frac{V_{B1}}{l_2}\sin\beta - \frac{V_{B1}}{l_1 l_2}(l_2 + h_1 \cos\beta)\tan\alpha_1$$

where "$l_1$" is the wheelbase of the tractor 11, "$l_2$" is the virtual wheelbase of the trailer 12, "$V_{B1}$" is the velocity vector of the rear wheel 11R of the tractor 11, "$h_1$" is the distance between the rear wheel 11R of the tractor 11 and the hitch point $C_1$, and "$\alpha_1$" is the steering angle of the front wheel 11F of the tractor 11.

In the case where the combination vehicle 10 includes the first yaw rate sensor 53 and the second yaw rate sensor 54, the abnormality detection unit 42C may calculate the estimated hitch angle $\beta^\wedge$ using the following expression 3.

[Math. 5]

$$\beta = -\left(\frac{1}{l_1}(l_2 + h_1)\alpha_1 + \frac{l_2}{V_{B1}}\dot{\beta}\right)$$

where "$l_1$" is the wheelbase of the tractor 11, "$l_2$" is the virtual wheelbase of the trailer 12, "$V_{B1}$" is the velocity vector of the rear wheel 11R of the tractor 11, "$h_1$" is the distance between the rear wheel 11R of the tractor 11 and the hitch point $C_1$, "$\alpha_1$" is the steering angle of the front wheel 11F of the tractor 11, "$\beta(\cdot)$" is the time rate of change of the hitch angle $\beta$, i.e., hitch angular velocity, and "$\cdot$" indicates a time derivative. The value of the difference between the yaw rate YR1 of the tractor 11 detected by the first yaw rate sensor 53 and the yaw rate YR2 of the trailer 12 detected by the second yaw rate sensor 54 is substituted for the hitch angular velocity ($\cdot$) in the expression 5.

When the following condition (G5) or condition (G6) is satisfied, the abnormality detection unit 42C determines that it is possible to use the estimated hitch angle $\beta^\wedge$ as a substitute value for the hitch angle $\beta$ detected by the hitch angle sensor 51. The abnormality detection unit 42C generates a detection signal S4 indicating that an abnormality with a substitute value for the hitch angle $\beta$ has occurred.

G5. $|\beta^\wedge - \beta| \geq \beta_{th}$

G6. The hitch angle $\beta$ cannot be detected by the hitch angle sensor 51.

"$\beta_{th}$" is a hitch angle determination threshold.

When neither of the above two conditions (G5), (G6) are satisfied, the abnormality detection unit 42C determines that the value of the hitch angle $\beta$ detected by the hitch angle sensor 51 is normal. The abnormality detection unit 42C generates a detection signal S4 indicating that the value of the hitch angle $\beta$ is normal.

<Substitute Signal Generation Unit 42D>

When the detection signal S4 generated by the abnormality detection unit 42C indicates that an abnormality with a substitute value has occurred in at least one of the above four detection targets (B1) to (B4), the substitute signal generation unit 42D generates a substitute signal(s) for the detection target(s) (B1) to (B4). Details are as follows.

The substitute signal generation unit 42D generates a first substitute signal S5 when the detection signal S4 indicates that an abnormality with a substitute value has occurred in the detection object (B2), i.e., in the steering angle $\alpha_1$ detected by the steering angle sensor 30C. The first substitute signal S5 is an electrical signal indicating the first estimated steering angle $\alpha_{11}^\wedge$ calculated based on the yaw rate YR1 of the tractor 11. The substitute signal generation unit 42D calculates the first estimated steering angle $\alpha_{11}^\wedge$ of the front wheels 11F in the same manner as the abnormality detection unit 42C.

The substitute signal generation unit 42D generates a second substitute signal S6 when the detection signal S4 indicates that an abnormality with a substitute value has occurred in the detection target (B3), i.e., in the vehicle speed V calculated based on the wheel speeds $V_l$, $V_r$. The second substitute signal S6 is an electrical signal indicating the vehicle speed V calculated using only the wheel speeds $V_l$, $V_r$ of the wheels whose wheel speeds $V_l$, $V_r$ can be detected.

The substitute signal generation unit 42D generates a third substitute signal S7 when the detection signal S4 indicates that an abnormality with a substitute value has occurred in the detection object (B4), i.e., the hitch angle $\beta$ detected by the hitch angle sensor 51. The third substitute signal S7 is an electrical signal indicating the estimated hitch angle $\beta^\wedge$. The substitute signal generation unit 42D calculates the estimated hitch angle $\beta^\wedge$ in the same manner as the abnormality detection unit 42C.

When the detection signal S4 generated by the abnormality detection unit 42C indicates that an abnormality with no substitute value has occurred in at least one of the above four detection targets (B1) to (B4), the substitute signal generation unit 42D generates a substitute signal(s) for the detection target(s) (B1) to (B4).

When the detection signal S4 generated by the abnormality detection unit 42C indicates that all of the above four detection targets (B1) to (B4) are normal, the substitute signal generation unit 42D does not generate substitute signals for the detection targets (B1) to (B4).

<State Manager 42E>

The state manager 42E determines the control mode of the reverse assist control for the combination vehicle 10 based on the detection signal S4 generated by the abnormality detection unit 42C. The state manager 42E sets the control mode of the reverse assist control to one of the following three control modes (C1) to (C3).

    C1. Normal mode
    C2. Bad mode
    C3. Abnormal Mode

The state manager 42E sets the control mode of the reverse assist control to the normal mode when the detection signal S4 generated by the abnormality detection unit 42C indicates that all of the above four detection targets (B1) to (B4) are normal.

The state manager 42E sets the control mode of the reverse assist control to the bad mode when the detection signal S4 generated by the abnormality detection unit 42C indicates that an abnormality with a substitute value has occurred in at least one of the above four detection targets (B1) to (B4).

The state manager 42E sets the control mode of the reverse assist control to the abnormal mode when the detection signal S4 generated by the abnormality detection unit 42C indicates that an abnormality with no substitute value has occurred in at least one of the above four detection targets (B1) to (B4).

The state manager 42E generates an electrical signal S10 indicating the set control mode. The display device 20 recognizes the control mode of the reverse assist control based on the electrical signal S10. The display device 20 displays the recognized control mode on the screen 21. The operator of the tractor 11 can visually recognize the control mode. The control unit 42B recognizes the control mode of the reverse assist control based on the electrical signal S10. The control unit 42B executes the reverse assist control according to the recognized control mode.

The state manager 42E generates a first request signal S8 to a drive device 60 of the tractor 11 and a second request signal S9 to a braking device 70 of the tractor 11 according to the control mode of the reverse assist control. The state manager 42E generates the first request signal S8 and the second request signal S9 when the control mode is the bad mode and the abnormal mode.

The drive device 60 includes a traction driving source and an automatic transmission for the tractor 11. The driving source generates a traction driving force for the tractor 11 according to the amount of depression of an accelerator pedal. The driving source is, for example, an internal combustion engine such as an engine, or a traction motor. The automatic transmission includes a parking lock mechanism. The parking lock mechanism is a mechanism that locks rotation inside the automatic transmission so that the wheels of the tractor 11, for example, the front wheels, do not rotate when the shift range of the tractor 11 is switched to a parking range.

The first request signal S8 includes an electrical signal for requesting the driving source to generate a driving force according to the control mode, and an electrical signal for requesting the parking lock mechanism to switch from an unlocked state to a locked state. The first request signal S8 also includes an electrical signal indicating a target value of the driving force to be generated by the driving source. The target value of the driving force is set in advance according to the control mode. The driving force is a controlled variable.

The braking device 70 generates a braking force for slowing down or stopping the tractor 11 according to the amount of depression of a brake pedal. The braking device 70 includes an electric parking brake (EPB). The electric parking brake is used to lock the wheels when the vehicle is stopped or parked. The electric parking brake is activated by driving a built-in motor.

The second request signal S9 includes an electrical signal for requesting the braking device 70 to generate a braking force according to the control mode, and an electrical signal for requesting the braking device 70 to activate the electric parking brake. The second request signal S9 also includes an electrical signal indicating a target value of the braking force to be generated by the braking device 70. The target value of the braking force is set in advance according to the control mode. The braking force is a controlled variable.

<Processing Procedure of Control Device 42>

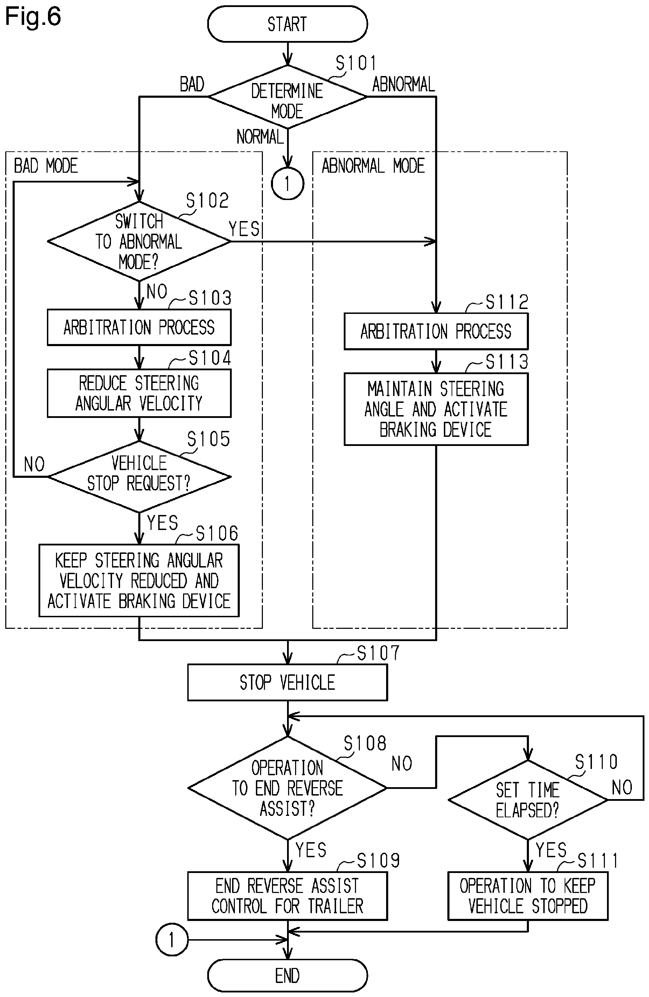

Next, the procedure of the process that is executed by the control device 42 will be described with reference to the flowchart of FIG. 6. Execution of the process of the flowchart is started when the operator performs an operation to start the reverse assist control, that is, when the assist start button 21A displayed on the screen 21 of the display device 20 is touched. The process of the flowchart is executed at a determined control cycle.

As shown in the flowchart of FIG. 6, the control device 42 first determines the control mode of the reverse assist control (step S101).

When all of the above four detection targets (B1) to (B4) are normal, the control device 42 determines that the control mode of the reverse assist control is the normal mode. When an abnormality with a substitute value occurs in at least one of the above four detection targets (B1) to (B4), the control device 42 determines that the control mode of the reverse assist control is the bad mode. When an abnormality with no substitute value occurs in at least one of the above four detection targets (B1) to (B4), the control device 42 determines that the control mode of the reverse assist control is the abnormal mode. When the control device 42 determines that the control mode is the normal mode, the process ends. When the control device 42 determines that the control mode is the bad mode, the process proceeds to step S102.

In step S102, the control device 42 determines whether the control mode needs to be switched from the bad mode to the abnormal mode. The process content of step S102 is the same as the process executed in the above step S101. When the control device 42 determines that the control mode needs to be switched to the abnormal mode (YES in step S102), the control device 42 switches the control mode to the abnormal mode. Specifically, the control device 42 causes the process to proceed to step S112 that will be described later. When the control device 42 determines that the control mode does not need to be switched to the abnormal mode (NO in step S102), the process proceeds to step S103.

In step S103, the control device 42 executes an arbitration process. The arbitration process is a process for arbitrating between a manipulated variable by the operator and a current controlled variable. The manipulated variable includes, for example, an acceleration manipulated variable related to the traction driving force for the combination vehicle 10, a braking manipulated variable related to the braking force to be applied to the combination vehicle 10, and a steering manipulated variable related to the steering angle of the front wheels 11F that are the steered wheels. The controlled variable includes, for example, an acceleration controlled variable that is the traction driving force for the combination vehicle 10, a braking controlled variable that is the braking force to be applied to the combination vehicle 10, and a steering controlled variable related to the steering angle of the front wheels 11F that are the steered wheels. The arbitration process is performed according to the control mode from the viewpoint of ensuring higher safety.

The control device 42 detects the amount of depression of the accelerator pedal that is a manipulated variable. The amount of depression of the accelerator pedal is an acceleration manipulated variable by the operator. The control device 42 calculates a driving force to be generated by the drive device 60 based on the amount of depression of the accelerator pedal. A driving force is an acceleration controlled variable. The control device 42 compares a first driving force corresponding to the amount of depression of the accelerator pedal with a second driving force that is a current driving force. The control device 42 selects either the first driving force or the second driving force, whichever has a smaller value. The control device 42 generates the first request signal S8 including the driving force selected as a target value of the driving force.

The control device 42 detects the amount of depression of the brake pedal. The amount of depression of the brake pedal is a braking manipulated variable by the operator. The control device 42 calculates a braking force to be generated by the braking device 70 based on the amount of depression of the brake pedal. A braking force is a braking controlled variable. The control device 42 compares a first braking force corresponding to the amount of depression of the brake pedal with a second braking force that is a current braking force. The control device 42 selects either the first braking force or the second braking force, whichever has a larger value. The control device 42 generates the second request signal S9 including the braking force selected as a target value of the braking force.

The control device 42 prioritizes control of the steering angle $\alpha_1$ of the front wheels 11F according to manual operation by the operator over control of the steering angle $\alpha_1$ of the front wheels 11F associated with execution of the reverse assist control. That is, the steering angle $\alpha_1$ according to the steering state of the steering wheel by the operator is implemented rather than the steering angle $\alpha_1$ according to the target steering angle $\alpha_1^*$ generated by the control unit 42B.

Next, the control device 42 executes a process for reducing a steering angular velocity of the front wheels 11F (step S104). The steering angular velocity is the time rate of change of the steering angle $\alpha_1$. The control device 42 executes a process for reducing the steering angular velocity of the front wheels 11F to a value smaller than the steering angular velocity permitted when the normal mode is set. The control device 42 adjusts, for example, the value of the target steering angle $\alpha_1^*$ of the front wheels 11F so that the steering angular velocity decreases to a value smaller than a determined limit value. From the viewpoint of improving safety, the limit value is set by, for example, simulations using a vehicle model. The limit value is a value smaller than the steering angular velocity permitted when the control mode is the normal mode.

Next, the control device 42 determines whether there is a vehicle stop request (step S105). A vehicle stop request is, for example, an operation of depressing the brake pedal by the operator. The operation of the brake pedal is detected by, for example, an in-vehicle pedal stroke sensor. The pedal stroke sensor generates an electrical signal S11 corresponding to the amount of operation of the brake pedal. The control device 42 recognizes whether the brake pedal has been operated based on the electrical signal S11. When it is recognized that the brake pedal has not been operated, the control device 42 determines that there is no vehicle stop request from the operator (NO in step S105), and the process returns to step S102. When it is recognized that the brake pedal has been operated, the control device 42 determines that there is a vehicle stop request from the operator (YES in step S105), and the process proceeds to step S106.

In step S106, the control device 42 performs a process for stopping the combination vehicle 10 while keeping the steering angular velocity at the reduced value smaller than the limit value. The process for stopping the combination vehicle 10 is a process for activating the braking device 70.

When the control device 42 confirms that the combination vehicle 10 is stopped (step S107), the process proceeds to step S108. The control device 42 determines whether the combination vehicle 10 is stopped based on, for example, the vehicle speed V.

In step S108, the control device 42 determines whether an operation to end the reverse assist control has been performed. When it is recognized that the assist end button 21B displayed on the screen 21 of the display device 20 has been touched, the control device 42 determines that an operation to end the reverse assist control has been performed. When it is recognized that the assist end button 21B displayed on the screen 21 of the display device 20 has not been touched, the control device 42 determines that an operation to end the reverse assist control has been performed.

When it is determined that an operation to end the reverse assist control has been performed (YES in step S108), the control device 42 ends the execution of the reverse assist control (step S109), and the process ends. When it is determined that an operation to end the reverse assist control has not been performed (NO in step S108), the control device 42 determines whether a set time has elapsed (step S110). Whether the set time has elapsed is determined from the time when it was confirmed in step S107 that the vehicle was stopped.

When it is determined that the set time has elapsed since the combination vehicle 10 was stopped, the control device 42 executes a process for keeping the combination vehicle 10 stopped (step S111), and the process ends. The control device 42 executes a process for activating the electric parking brake and a process for switching the parking lock mechanism from the unlocked state to the locked state.

When it is determined in step S101 that the control mode is the abnormal mode, the control device 42 performs an arbitration process in step S112, and the process then proceeds to step S113. The process content of step S112 is the same as the process executed in the above step S103.

In step S113, the control device 42 activates the braking device 70 while maintaining the steering angle $\alpha_1$ of the front wheels 11F. The process then proceeds to step S107.

<Effects of Embodiment>

The present embodiment has the following effects.

(1) The control device 42 includes the normal mode, the bad mode, and the abnormal mode as the control modes of the reverse assist control. The normal mode is a control mode that is set when no abnormality is detected in the vehicle state quantities. The vehicle state quantities include the above four detection targets (B1) to (B4). The bad mode is a control mode that is set when an abnormality is detected in any vehicle state quantity and there is a substitute value for that vehicle state quantity. The abnormal mode is a control mode that is set when an abnormality is detected in any vehicle state quantity and there is no substitute value for that vehicle state quantity. When the control mode is set to the bad mode, the control device 42 continues to execute the reverse assist control using the substitute value for the vehicle state quantity. When the control mode is set to the abnormal mode, the control device 42 executes the process for stopping the combination vehicle 10. As described above, when an abnormality is detected in any vehicle state quantity used in the reverse assist control, the behavior of the combination vehicle 10 is controlled according to whether the control mode of the reverse assist control is the bad mode or the abnormal mode. This allows to appropriately deal with the abnormality in the vehicle state quantity.

(2) When the control mode is set to the bad mode, the control device 42 executes the process for stopping the combination vehicle 10 in response to a vehicle stop request received through a specific operation performed by the operator of the combination vehicle 10. That is, when the operator's intention to stop the combination vehicle 10 is confirmed during execution of the reverse assist control in the bad mode, the process for stopping the combination vehicle 10 is executed. Since the combination vehicle 10 is thus stopped according to the operator's intention to stop the vehicle, the operator is unlikely to feel strange.

(3) When the control mode is set to the bad mode, the control device 42 executes the arbitration process for arbitrating between a manipulated variable by the operator of the combination vehicle 10 and a current controlled variable. Arbitrating between the manipulated variable by the operator of the combination vehicle 10 and the current controlled variable allows to more appropriately execute the reverse assist control in the bad mode.

(4) When the control mode is set to the bad mode, the control device 42 executes the process for reducing the steering angular velocity of the front wheels 11F to a value smaller than the steering angular velocity permitted when the normal mode is set. Therefore, when the control mode is set to the bad mode, the steering angular velocity of the front wheels 11F is reduced to a value smaller than when the normal mode is set. This allows to more safely execute the reverse assist control in the bad mode.

(5) When the control mode is set to the bad mode, the control device 42 executes the process for stopping the combination vehicle 10 while keeping the steering angular velocity of the front wheels 11F reduced, in response to the vehicle stop request received through the specific operation performed by the operator of the combination vehicle 10. Since the combination vehicle 10 is thus stopped according to the operator's intention to stop the vehicle, the operator is unlikely to feel strange. Moreover, the steering angular velocity of the front wheels 11F is reduced to a value smaller than when the normal mode is set. This allows to more safely execute the reverse assist control in the bad mode.

(6) When the control mode is set to the abnormal mode, the control device 42 executes the arbitration process for arbitrating between a manipulated variable by the operator of the combination vehicle 10 and a current controlled variable and then execute the process for stopping the combination vehicle 10. Arbitrating between the manipulated variable by the operator of the combination vehicle 10 and the current controlled variable when the control mode is set to the abnormal mode allows to more appropriately execute the process for stopping the combination vehicle.

(7) When the control mode is set to the abnormal mode, the control device 42 executes the process for stopping the combination vehicle 10 while maintaining the steering angle $\alpha_1$ of the front wheels 11F. Maintaining the steering angle $\alpha_1$ of the front wheels 11F when the control mode is set to the abnormal mode allows to more safely execute the process for stopping the combination vehicle 10.

(8) The arbitration process includes the process for selecting either a braking force corresponding to a braking manipulated variable by the operator or a current braking force, whichever has a larger value, as a braking force to be applied to the wheels of the combination vehicle 10. The arbitration process also includes the process for selecting either a driving force corresponding to an acceleration manipulated variable by the operator or a current driving force, whichever has a smaller value, as a traction driving force for the combination vehicle 10. The arbitration process also includes the process for prioritizing control of the steering angle $\alpha_1$ of the front wheels 11F according to manual operation by the operator over control of the steering angle $\alpha_1$ of the front wheels 11F associated with execution of the reverse assist control.

According to this configuration, the braking force is controlled to a larger value, while the driving force is controlled to a smaller value. Moreover, the control of the steering angle $\alpha_1$ according to the manual operation by the operator is prioritized over the control of the steering angle $\alpha_1$ associated with the execution of the reverse assist control. This allows to more safely execute the reverse assist control when the control mode is set to the bad mode. This also allows to more safely execute the process for stopping the combination vehicle when the control mode is set to the abnormal mode.

(9) When the control mode is set to the bad mode or the abnormal mode, the control device 42 ends execution of the reverse assist control when an operation to end the reverse assist control by the operator of the combination vehicle 10 is detected after the combination vehicle 10 is stopped by execution of the process for stopping the combination vehicle 10. According to this configuration, the execution of the reverse assist control can be ended based on the operator's intention to end the execution of the reverse assist control.

(10) When the control mode is set to the bad mode or the abnormal mode, the control device 42 executes the following process when the combination vehicle 10 is stopped by execution of the process for stopping the combination vehicle 10. That is, the control device 42 executes the process for keeping the combination vehicle 10 stopped when an operation to end the reverse assist control by the operator of the combination vehicle 10 is not detected even after the determined set time has elapsed since the time when the combination vehicle 10 was stopped. This improves safety as traveling of the vehicle is restricted.

(11) The control device 42 executes a process for notifying the operator of the combination vehicle 10 of the control mode. The control device 42 visually notifies the operator of the control mode via, for example, the display device 20. This allows the operator to recognize the control mode of the reverse assist control. This can also prompt the operator to take an action according to the control mode.

(12) The control device 42 detects an abnormality in the target steering angle $\alpha_1{}^*$ of the front wheels 11F, the steering angle $\alpha_1$ of the front wheels 11F, the vehicle speed V, and the hitch angle $\beta$. These abnormality detection targets are a plurality of types of vehicle state quantities used in the reverse assist control. This allows to appropriately deal with abnormalities in the plurality of types of vehicle state quantities.

(13) The operator can specify the target virtual steering angle $\alpha_2{}^*$ of the trailer 12 by operating the input device 41 in the same way as he/she specifies the steering angle of the front wheels 11F by steering the steering wheel of a regular passenger vehicle. Since the operator specifies the target virtual steering angle $\alpha_2{}^*$ of the trailer 12 by operating the input device 41, the reverse movement of the trailer 12 that is a nonlinear unstable system can be controlled by regarding the combination vehicle as a single vehicle of the tractor 11 alone, that is, a regular passenger vehicle of front-wheel steering. This allows to more appropriately assist in the reverse operation of the combination vehicle 10. The operator can reverse the combination vehicle 10 with the same feeling as that in the case of a regular passenger vehicle.

<Other Embodiments>

The present embodiment may be modified as follows.

- In step S104 of the flowchart in FIG. 6, the control device 42 may execute a process for reducing the vehicle speed V, in addition to the process for reducing the steering angular velocity. In step S104, the control device 42 may execute a process for reducing the vehicle speed V, instead of the process for reducing the steering angular velocity.
- In the flowchart of FIG. 6, the processes of steps S102 to 104 may be omitted. The processes of steps S102 to 104 may be combined and executed as appropriate according to on the product specifications etc. When the process of step S106 is omitted, the process for keeping the steering angular velocity reduced may not be executed in the process of step S106.
- In the flowchart of FIG. 6, the process of step S112 may be omitted. In this case, when the control device 42 determines in step S101 that the control mode is the abnormal mode, the process proceeds to step S113. In the process of step S113, the process for maintaining the steering angle $\alpha_1$ of the front wheels 11F may not be executed.
- The abnormality detection unit 42C and the state manager 42E may be integrated into one processing unit. The one processing unit has the function of the abnormality detection unit 42C and the function of the state manager. For example, the abnormality detection unit 42C may have the function of the state manager 42E. In this case, the state manager 42E can be omitted. Alternatively, the state manager 42E may have the function of the abnormality detection unit 42C. In this case, the abnormality detection unit 42C can be omitted.

## Claims

1. A control device for a combination vehicle, the combination vehicle including a tractor including a steered wheel that is a wheel configured to change a direction of travel of the vehicle, and a trailer towed by the tractor, wherein

   the control device is configured to execute reverse assist control that is control for assisting in reverse operation of the combination vehicle, and a process for detecting an abnormality in a vehicle state quantity used in the reverse assist control,
   the control device includes, as a control mode of the reverse assist control,

   a normal mode that is set when the abnormality is not detected in the vehicle state quantity,
   a bad mode that is set when the abnormality is detected in the vehicle state quantity and there is a substitute value for the vehicle state quantity, and
   an abnormal mode that is set when the abnormality is detected in the vehicle state quantity and there is no substitute value for the vehicle state quantity, and

   the control device is configured to

   when the control mode is set to the bad mode, continue to execute the reverse assist control using the substitute value for the vehicle state quantity, and
   when the control mode is set to the abnormal mode, execute a process for stopping the combination vehicle.

2. The control device for the combination vehicle according to claim 1, wherein the control device is configured to, when the control mode is set to the bad mode, execute the process for stopping the combination vehicle in response to a vehicle stop request received through a specific operation performed by an operator of the combination vehicle.

3. The control device for the combination vehicle according to claim 1 or 2, wherein the control device is configured to, when the control mode is set to the bad mode, execute an arbitration process for arbitrating between a manipulated variable by an operator of the combination vehicle and a current controlled variable.

4. The control device for the combination vehicle according to claim 1 or 2, wherein the control device is configured to, when the control mode is set to the bad mode, execute a process for reducing a steering angular velocity of the steered wheel to a value smaller than the steering angular velocity permitted when the normal mode is set.

5. The control device for the combination vehicle according to claim 4, wherein the control device is configured to, when the control mode is set to the bad mode, execute the process for stopping the combination vehicle while keeping the steering angular velocity of the steered wheel reduced, in response to a vehicle stop request received through a specific operation performed by an operator of the combination vehicle.

6. The control device for the combination vehicle according to claim 1, wherein the control device is configured to, when the control mode is set to the abnormal mode, execute an arbitration process for arbitrating between a manipulated variable by an operator of the combination vehicle and a current controlled variable and then execute the process for stopping the combination vehicle.

7. The control device for the combination vehicle according to claim 1 or 6, wherein the control device is configured to, when the control mode is set to the abnormal mode, execute the process for stopping the combination vehicle while maintaining a steering angle of the steered wheel.

8. The control device for the combination vehicle according to claim 3, wherein the arbitration process includes

a process for selecting either a braking force corresponding to a braking manipulated variable by the operator or a current braking force, whichever has a larger value, as a braking force to be applied to the wheel,
a process for selecting either a driving force corresponding to an acceleration manipulated variable by the operator or a current driving force, whichever has a smaller value, as a traction driving force for the combination vehicle, and
a process for prioritizing control of a steering angle of the steered wheel according to manual operation by the operator over control of the steering angle of the steered wheel associated with execution of the reverse assist control.

9. The control device for the combination vehicle according to claim 2, wherein the control device is configured to, when the control mode is set to the bad mode or the abnormal mode, end execution of the reverse assist control when an operation to end the reverse assist control by the operator of the combination vehicle is detected after the combination vehicle is stopped by execution of the process for stopping the combination vehicle.

10. The control device for the combination vehicle according to claim 2, wherein the control device is configured to, when the control mode is set to the bad mode or the abnormal mode, execute a process for keeping the combination vehicle stopped when an operation to end the reverse assist control by the operator of the combination vehicle is not detected even after a determined set time has elapsed since a time when the combination vehicle was stopped by execution of the process for stopping the combination vehicle.

11. The control device for the combination vehicle according to claim 1, wherein the control device is configured to execute a process for notifying an operator of the combination vehicle of the control mode.

12. The control device for the combination vehicle according to claim 1 or 2, wherein the vehicle state quantity includes

a target steering angle of the steered wheel,
a steering angle of the steered wheel,
a vehicle speed of the combination vehicle, and
a hitch angle that is an angle between a central axis extending in a longitudinal direction of the tractor and a central axis extending in a longitudinal direction of the trailer.

Fig.1

Fig.2

Fig.3

Fig.4

Fig.5

EP 4 497 658 A1

Fig.6

```
                    ┌─────────────┐
                    │    START    │
                    └──────┬──────┘
                           │ S101
              BAD    ╱─────┴─────╲   ABNORMAL
          ┌─────────┤  DETERMINE  ├─────────┐
          │          ╲    MODE    ╱          │
          │           ╲────┬────╱            │
          │            NORMAL                │
          │               │                  │
   ┌──────│───────────────│──────┐  ┌────────│──────────────┐
   │ BAD MODE             │      │  │ ABNORMAL MODE          │
   │      │             (  1  )  │  │        │               │
   │      ↓   S102                │  │        │               │
   │    ╱───┴───╲                 │  │        │               │
   │   ╱ SWITCH   ╲    YES         │  │        │               │
   │  ┤TO ABNORMAL ├───────────────│──│────────│──────────┐   │
   │   ╲  MODE?   ╱                │  │        │          │   │
   │    ╲───┬───╱                  │  │        │          │   │
   │      NO│  S103                 │  │        ↓  S112     │   │
   │     ┌──┴───────────┐          │  │  ┌─────┴────────┐  │   │
   │     │ ARBITRATION  │          │  │  │ ARBITRATION  │  │   │
   │     │   PROCESS    │          │  │  │   PROCESS    │  │   │
   │     └──────┬───────┘          │  │  └──────┬───────┘  │   │
   │            │ S104             │  │         │ S113     │   │
   │     ┌──────┴───────┐          │  │  ┌──────┴───────┐  │   │
   │     │REDUCE STEERING│         │  │  │ MAINTAIN STEERING│ │
   │     │ANGULAR VELOCITY│        │  │  │ ANGLE AND ACTIVATE│
   │     └──────┬───────┘          │  │  │ BRAKING DEVICE│  │   │
   │            │ S105             │  │  └──────┬───────┘  │   │
   │       ╱────┴────╲             │  │         │          │   │
   │   NO ╱  VEHICLE   ╲           │  │         │          │   │
   │  ┌──┤ STOP REQUEST?├          │  │         │          │   │
   │  │   ╲            ╱           │  │         │          │   │
   │  │    ╲────┬────╱            │  │         │          │   │
   │  │      YES│  S106            │  │         │          │   │
   │  │  ┌──────┴───────────┐     │  │         │          │   │
   │  │  │ KEEP STEERING ANGULAR│  │  │         │          │   │
   │  │  │ VELOCITY REDUCED AND│   │  │         │          │   │
   │  │  │ ACTIVATE BRAKING DEVICE│ │  │         │          │   │
   │  │  └──────┬───────────┘     │  │         │          │   │
   └──┴────────│──────────────────┘  └─────────│──────────┘   │
              │                                │
              └────────────┬───────────────────┘
                           ↓ S107
                    ┌──────┴──────┐
                    │ STOP VEHICLE│
                    └──────┬──────┘
                           │ S108
                      ╱────┴────╲          NO
                     ╱ OPERATION  ╲   ┌──────────╱────╲
                    ┤ TO END REVERSE├──┤  SET TIME │ NO
                     ╲  ASSIST?   ╱   │  ╲ELAPSED? ╱───┐
                      ╲────┬────╱     │   ╲───┬───╱    │
                       YES │ S109     │   YES │ S111   │
                ┌──────────┴────┐     │  ┌────┴─────┐  │
                │END REVERSE ASSIST│   │  │OPERATION TO KEEP│
                │CONTROL FOR TRAILER│  │  │VEHICLE STOPPED│ │
                └──────────┬────┘     │  └────┬─────┘  │
         (  1  )──────────┤          │       │        │
                          ↓          └───────┘        │
                    ┌─────┴─────┐
                    │    END    │
                    └───────────┘
```

## INTERNATIONAL SEARCH REPORT

| | International application No. |
|---|---|
| | **PCT/JP2023/008643** |

### A. CLASSIFICATION OF SUBJECT MATTER

**B62D 6/00**(2006.01)i; **B62D 53/08**(2006.01)i
FI: B62D6/00; B62D53/08 Z

According to International Patent Classification (IPC) or to both national classification and IPC

### B. FIELDS SEARCHED

Minimum documentation searched (classification system followed by classification symbols)

B62D6/00; B62D53/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 2019/0061817 A1 (FORD GLOBAL TECHNOLOGIES, LLC) 28 February 2019 (2019-02-28) title, abstract, paragraphs [0031]-[0038], fig. 1-2, etc. | 1-2, 9-11 |
| A | | 3-8, 12 |
| Y | WO 2015/052897 A1 (NSK LTD.) 16 April 2015 (2015-04-16) abstract, etc. | 1-2, 9-11 |
| A | | 3-8, 12 |
| Y | WO 2016/047284 A1 (HITACHI AUTOMOTIVE SYSTEMS STEERING, LTD.) 31 March 2016 (2016-03-31) abstract, etc. | 1-2, 9-11 |
| A | | 3-8, 12 |
| Y | WO 2019/003962 A1 (ISUZU MOTORS LTD) 03 January 2019 (2019-01-03) abstract, paragraph [0057], etc. | 1-2, 9-11 |
| A | | 3-8, 12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/008643**

| C. | DOCUMENTS CONSIDERED TO BE RELEVANT | |
|---|---|---|
| Category* | Citation of document, with indication, where appropriate, of the relevant passages | Relevant to claim No. |
| Y | WO 2020/184297 A1 (MAZDA MOTOR) 17 September 2020 (2020-09-17) paragraphs [0090]-[0091], etc. | 1-2, 9-11 |
| A | | 3-8, 12 |

Form PCT/ISA/210 (second sheet) (January 2015)

INTERNATIONAL SEARCH REPORT
Information on patent family members

| International application No. |
|---|
| **PCT/JP2023/008643** |

| Patent document cited in search report | | | Publication date (day/month/year) | Patent family member(s) | | | Publication date (day/month/year) |
|---|---|---|---|---|---|---|---|
| US | 2019/0061817 | A1 | 28 February 2019 | DE | 102018121015 | A1 | |
| | | | | CN | 109421724 | A | |
| WO | 2015/052897 | A1 | 16 April 2015 | US | 2015/0274202 | A1 | |
| | | | | abstract, etc. | | | |
| | | | | EP | 2990303 | A1 | |
| | | | | CN | 105473420 | A | |
| WO | 2016/047284 | A1 | 31 March 2016 | US | 2017/0240168 | A1 | |
| | | | | abstract, etc. | | | |
| | | | | KR | 10-2017-0038063 | A | |
| | | | | CN | 107074273 | A | |
| WO | 2019/003962 | A1 | 03 January 2019 | US | 2021/0155288 | A1 | |
| | | | | abstract, paragraph [0057], etc. | | | |
| | | | | CN | 110799408 | A | |
| WO | 2020/184297 | A1 | 17 September 2020 | US | 2021/0403037 | A1 | |
| | | | | paragraphs [0111]-[0112], etc. | | | |
| | | | | EP | 3929063 | A1 | |
| | | | | CN | 113508069 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9592851 B